# EUROPEAN PATENT APPLICATION

(11) **EP 1 262 238 A2**
(43) Date of publication of application: **04.12.2002**
(21) Application number: 02253551.2
(22) Date of filing: 21.05.2002
(51) Int. Cl.: B02B 1/06, B03B 5/28, B03B 5/42, C12C 1/02

(54) **Apparatus for washing and/or separating grain and method relating thereto**

(30) Priority: 21.05.2001 GB 0112320
(71) Applicant: Don Valley Engineering Company Ltd, Doncaster DN1 2ST (GB)
(72) Inventor: Smith, Barry Don Valley Engineering Company Ltd, Doncaster DN1 2ST (GB)
(74) Representative: Wood, Graham

(57) **Abstract**

Washing apparatus (2) is provided which is suitable for washing and separating grain from extraneous material. The apparatus includes a rotatable drum (6) for containing a liquid (14), the drum having a grain exit (10) and floating extraneous material exit (12). The drum is further provided with one or more skirt members adjacent a portion of the internal surface thereof. The skirt members trap the grain which has sunk or is sinking in the liquid during rotation of the drum. The trapped grain is removed from the skirt members via the grain exit and the extraneous material floats on the liquid surface in the drum and is removed from the drum via the extraneous material exit.

## Description

The present invention relates to an improved apparatus for washing grains, such as barley, and a method relating thereto, and in particular to an apparatus and method of washing grain as part of a malting, brewing or distilling process.

Barley and other grains are used in brewing, distilling and vinegar making processes wherein the grain is steeped, germinated and then dried for malting. The grain is typically delivered to the Maltsters dry and pre-screened, however, unacceptable amounts of extraneous grain materials such as husks, dust, dirt and damaged cereal grains are frequently contained therein. The grain thus requires washing to separate out this extraneous material from the healthy grain.

Conventional grain processing methods typically have steps to separate the good grain from the extraneous grain material during or at the end of the malting process. A problem with this is that energy has already been expended in taking the extraneous matter through stages of the malting process. Subsequent removal of extraneous matter which has already been part-malted or malted reduces the total product output of malted grain from the process thereby reducing the efficiency of said process. In addition, unwashed grain is likely to contain phosphates and nitrates which have been picked up on the grain surface during growth from fertilisers, pollutants and the like. Since malted grain is eventually sold in some form for human consumption, there are certain food quality standards it has to conform to and such chemicals and pollutants are thus undesirable.

A pre-malting screening process has been introduced in an attempt to screen the grain for contaminants when it is brought to the Maltsters from the field. This pre-screening process tends to remove only the larger contaminating objects and smaller sized contaminants such as dust, straw particles, damaged grain and chemicals are not removed. A further problem is that the dust associated with the grain is an environmental health hazard to workers handling the product and can result in diseases such as Farmers Lung.

The object of the present invention is to provide an improved apparatus and method for washing and separating grain from extraneous material which overcomes the abovementioned problems and which ultimately increases the efficiency of malting processes.

According to a first aspect of the present invention there is provided washing and/or material separating apparatus suitable for washing and separating grain from extraneous material, said apparatus including a rotatable hollow reservoir for containing a liquid, said reservoir having grain exit means and extraneous material exit means, and characterised in that said reservoir is provided with one or more skirt members adjacent at least a portion of the internal surface thereof, said skirt members provided for trapping said grain which has sunk or is sinking in the liquid in the reservoir on rotation of said reservoir, said trapped grain leaving the said skirt members via said grain exit means and said extraneous material floating at or near the liquid surface in the reservoir and being removed from said reservoir via said extraneous material exit means.

Once the grain and its carrying fluid (liquid) have been discharged from the reservoir, the grain is dewatered and collected for further processing. This further processing can include further wash steps.

Contaminants of the grain can take three forms:
a) Extraneous material capable of floating in liquid, such as husks, straw and damaged grain. This material can be removed via the extraneous material exit means of the apparatus.
b) Soil and mineral residues which tend to sink in the liquid and are therefore removed via the grain exit means.
c) Chemical constituents on the grain surface, such as fertilisers, which are released through the action of wetting by the carrying liquid in which the grain is placed in when in the apparatus. These constituents are removed during the dewatering steps when the grain and extraneous material leaves the apparatus.

Thus it can be seen that the grain may be required to undergo further washing steps after leaving the apparatus to ensure that the material a), b) and c) are removed from the grain.

Preferably the grain exit and extraneous material exit means are separated a spaced distance apart.

Preferably the skirt members according to the present invention are in the form of sink spirals such as scrolls or wall members provided substantially parallel with at least a part of the internal surface of the reservoir and provided a spaced distance apart therefrom. The grain is trapped between the skirt members and the internal surface of the reservoir during rotation of the reservoir.

In a preferred embodiment at least two skirt members are provided adjacent at least a portion of the internal surface of the reservoir.

Preferably the grain exit means is in the form of one or more apertures or slots provided on a wall or walls of the reservoir. The grain is released from the aperture or slots when the reservoir is rotated to a position with the aperture/slots at or adjacent the base of the reservoir. The grain and liquid then discharge from reservoir via the aperture/slot under gravity until the aperture/slot is moved to a position above the base.

In a preferred embodiment two apertures or slots are provided on walls of the reservoir.

Preferably the skirt members, hereinafter referred to as sink spirals, have an inlet in the reservoir adjacent the reservoir inner surface and an outlet in the form of an aperture or slot through which the liquid and grain can be discharged. In order to prevent the liquid in the reservoir from being emptied completely during rotation of the reservoir, the inlet in the reservoir is kept above the liquid level before the liquid and grain begin to discharge through the aperture/slot. Thus the liquid level in the reservoir is controlled as are the dimensions of the sink spirals.

In one embodiment the reservoir rotates continuously or intermittently in its direction of operation. Thus the reservoir typically rotates through 360 degrees in one example. In an alternative embodiment the reservoir can oscillate in a clockwise and/or anticlockwise direction through angles of less than 360 degrees.

The washing process of the grain is preferably a continuous operation but can be a batch process if required.

Preferably liquid and grain enters the reservoir along a grain reception chute provided at an end of the reservoir, typically at a point along the rotational axis of the reservoir. The bulk of the liquid typically leaves the reservoir via an opposite end of the reservoir also at a point along the rotational axis of the reservoir. A smaller amount of liquid leaves the reservoir via the grain exit means. The liquid is caused to flow through the reservoir from the entrance to the exit due to liquid being pumped into the reservoir, the rotation of the reservoir and the differing size of the inlet and outlet apertures. The grain exit means (outlet aperture) being typically larger than the skirt members inlet means.

Typically the grain is discharged from the sink spirals into a grain exit chute for dewatering, and the extraneous floating material is discharged from the end of said rotatable reservoir into an extraneous material exit chute where it is also dewatered.

The extraneous float material includes dust, straw particles, foreign matter, pollutants and chemicals held in the carrying liquid and/or the like.

According to a second aspect of the present invention there is provided a method suitable for washing and separating grain from extraneous material, said method including the steps of inputting grain into a rotatable hollow reservoir containing a liquid, leaving the grain in said rotating reservoir for a pre-determined period of time to allow the grain to sink in the liquid and become trapped in one or more skirt members provided on at least a portion of the internal surface thereof, removing said trapped grain from said skirt members via grain exit means, the extraneous material floating at the liquid surface in the reservoir, and removing said extraneous material via said extraneous material exit means.

Preferably the grain is resident in the reservoir for a pre-determined period of time sufficient to allow the grain to sink and the extraneous material and pollutants to be separated therefrom. Thus the speed of rotation of the reservoir is adjusted to provide sufficient residency time for the grain to be washed.

The unwashed grain can be conveyed in a dry form directly to a grain reception chute which is in communication with the reservoir. The grain enters the chute dry and is wetted/soaked by a liquid supply as it progresses down the reception chute before being flushed into the rotatable reservoir. The liquid flow along the reception chute helps to move the grain into the reservoir. Alternatively the grain can be conveyed to a pre-liquid reception tank/container where it is thoroughly wetted before being pumped into the rotatable reservoir along with its transporting liquid via pump means.

Preferably the extraneous material is discharged from the reservoir via weir means. The surface of the liquid is allowed to float over the weir and as it does so the liquid carries with it the floating extraneous material. The weir means is provided at an end of the reservoir.

Preferably the liquid used in the washing apparatus is clean water which can be added in whole or part to either or both of the reception chute or reservoir.

Preferably the reservoir is in the form a drum and the one or more sink spirals are provided adjacent at least a part of the internal circumference thereof. Floating material is prevented from entering the sink spirals/skirt members by means of the inlet to the sink spirals being below the surface of the liquid.

The residence time of the grain in the drum is sufficient to allow the extraneous matter to float and the grain to sink and can be optimised by altering the dimensions of the rotatable drum, the speed at which the drum rotates and/or the flow of water through the drum. In addition, the dimensions of the sink spirals and the distance they are separated from the internal surface of the drum is determined by the size and quantity of the grain to be washed.

Preferably one or more dewatering sieves are provided at the ends of the grain exit chute and/or the extraneous material exit chute to collect and dewater the washed grain and extraneous material respectively. The dewatered and washed grain then proceeds into further washing steps or the malting process and the dewatered extraneous matter can be disposed of as organic waste or it can be dried and further processed to be used as animal feed, thereby limiting any waste from the described washing process. The apertures of the sieve screens can be altered to ensure a certain grain size and/or extraneous particle size are retained.

An advantage of the present invention is that by wetting the grain prior to steeping, dust emissions are suppressed and the steeping time is reduced thereby increasing the output of steeped grain per unit of time.

A further advantage of the present invention is that in removing the extraneous material before the malting process, the usable product output of said malting process is increased and thus the efficiency of said process is also increased, as the energy used in the malting process is used on the grain rather than the extraneous material. In addition, the action of the skirt members/sink spirals means that the reservoir is self emptying if no further liquid is added to the reservoir. Thus the process can be stopped at any time by removing the liquid supply from the reservoir and waiting for the reservoir to self empty. This prevents the need for manual intervention to empty the reservoir and prevents and problems associated with water stagnating in the reservoir. An internal liquid spray system can be fitted in the reservoir to perform an internal cleaning cycle with clean liquid and/or disinfectant in one or more cycles to ensure the apparatus is clean and ready for its next use. The cleaning liquid and any contaminants can be self emptied from the reservoir as described above. The reservoir can then be left to dry before its next use.

Embodiments of the present invention will now be described with reference to the following drawings, wherein:-
Figure 1 is a schematic representation of a dry feed washing apparatus and process according to the present invention;
Figure 2a is a cross section taken through the rotatable drum of the present invention;
Figure 2b is a perspective view of the rotatable drum of the present invention;
Figure 3 is a schematic representation of a dry feed washing apparatus with waste water processing steps;
Figure 4 is a schematic representation of a wet feed washing apparatus with waste water processing steps.

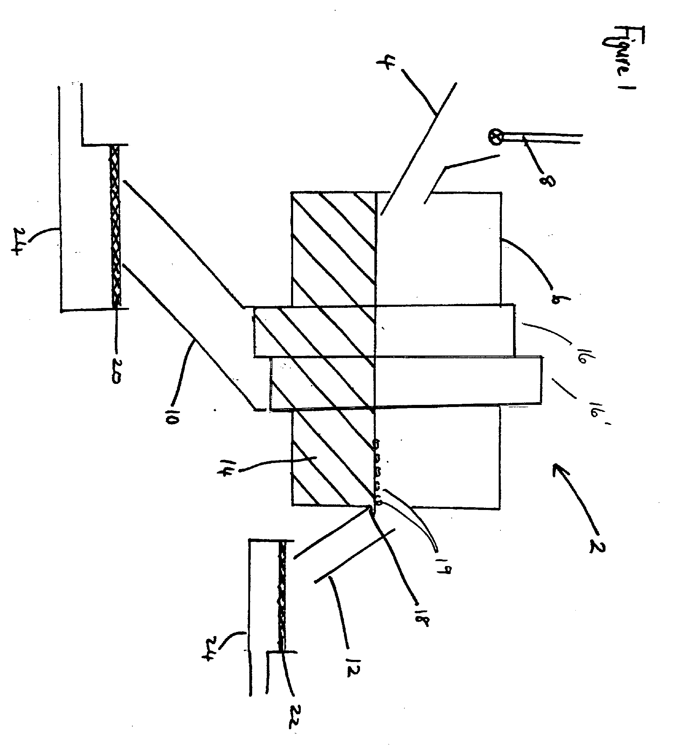

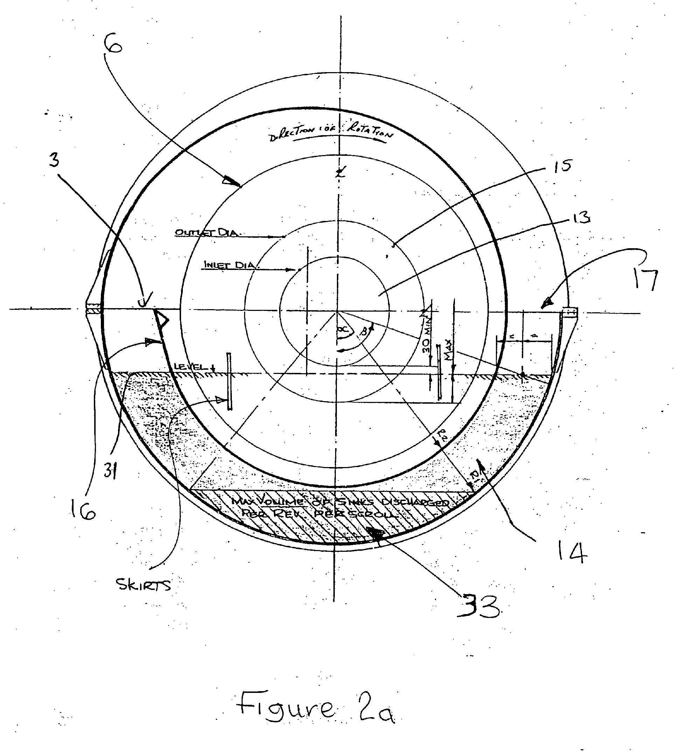

Referring firstly to Figures 1, 2a and 2b, there is illustrated a washing apparatus 2 comprising a grain reception chute 4 in communication with a rotatable hollow drum 6 rotating about an axis 7, a water supply 8, a grain exit chute 10 and an extraneous material exit chute 12. (the motor and drive shaft for rotating the drum are not shown for reasons of clarity). The drum 6 has two ends 9 and 11 with apertures 13, 15 located substantially centrally thereof, with the outlet aperture 15 typically having a larger diameter than the inlet aperture 13.

Stored dry grain is conveyed into the rotatable drum 6 through aperture 13 along grain reception chute 4. The grain is thoroughly wetted prior to delivery into the drum 6 by water 14 from the water supply 8.

The rotatable drum 6 has two sink spirals 16, 16', but could also have more, on a portion of the internal circumference thereof as illustrated in Figure 2a. The sink spirals referred to herein are defined as skirt members which spiral within the reservoir and trap the sinking grain and sinking extraneous material therein. The two sink spirals are offset from each other by 180 degrees in order to balance the reservoir during rotation thereof. However, it is noted that the sink spirals can be offset to a smaller or greater degree, can be adjacent each other or separated a pre-determined spaced distance therefrom and/or can include more than two sink spirals to allow appropriate balancing of the reservoir. The sink spirals are shown adjacent each other in the figures for clarity and due to the ease of manufacturing them in this manner.

The drum is filled with water 14 via the water supply 8 to a level 31 below the inlet 3 of the sink spirals 16. This prevents all the water from being emptied via the skirt members during rotation of the drum. Upon delivery of the grain into the drum 6, the healthy (good) grain sinks to the bottom of said drum caused by the differential densities of the grain relative to the water and the turbulent action of the water flow. As the drum 6 rotates the sunken grains are moved along the internal circumferential surface of said drum and are delivered into the inlet of the sink spirals 16, where the rotation of the drum 6 and the action of gravity causes the grain and its carrying water to travel towards the grain exit 17. The healthy grains are then discharged along grain exit chute 10 via the discharge scroll/aperture grain exit 17 when the discharge scroll/aperture is in a position under the drum at the base thereof. The volume of grain sinks which can be discharged per revolution of the drum is determined by the area 33 in which the sinks collect and which can pass through the exit aperture 17.

Upon delivery of the grain into the drum 6, the extraneous material 19 floats at or near the surface of the water 14 and is maintained above the level of the sink spirals 16 so that it cannot be collected on the same and so cannot be discharged via the aperture exit 17. Therefore the healthy grain is separated from the extraneous matter by virtue of their different natural densities. Typically whole healthy grain has a relative density (R.D) greater than 1.0 R.D whilst the extraneous materials have a density of less than 1.0 R.D. Their introduction into clean water with a density of 1.0 R.D enables the healthy grain to sink and the extraneous material to float.

A weir 18 is provided at the end 11 of the drum 6, opposite the end 9. The flow of water through the drum 6 from end 9 to the end 11 results in the surface water 14 overflowing the weir carrying with it the extraneous matter 19. The extraneous matter is then discharged down extraneous material exit chute 12. The weir is in the form of a lip protruding outwardly from the wall of the aperture 15.

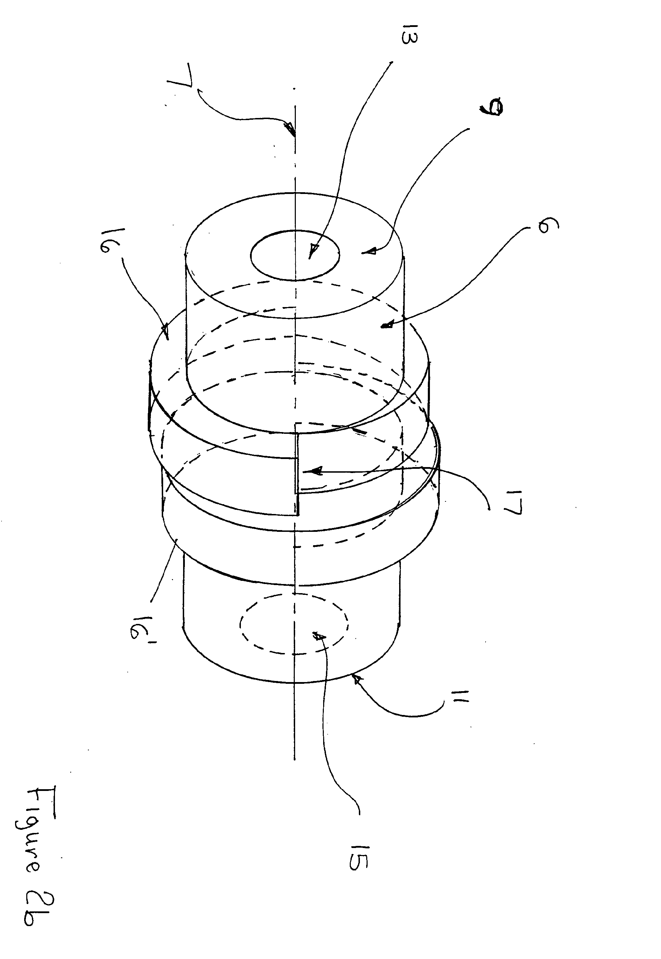

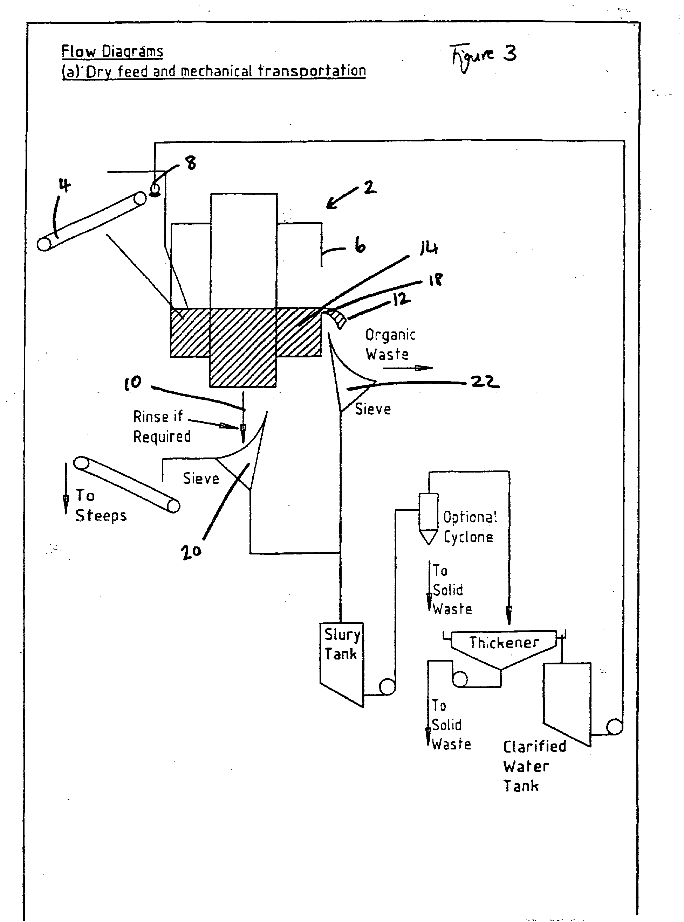

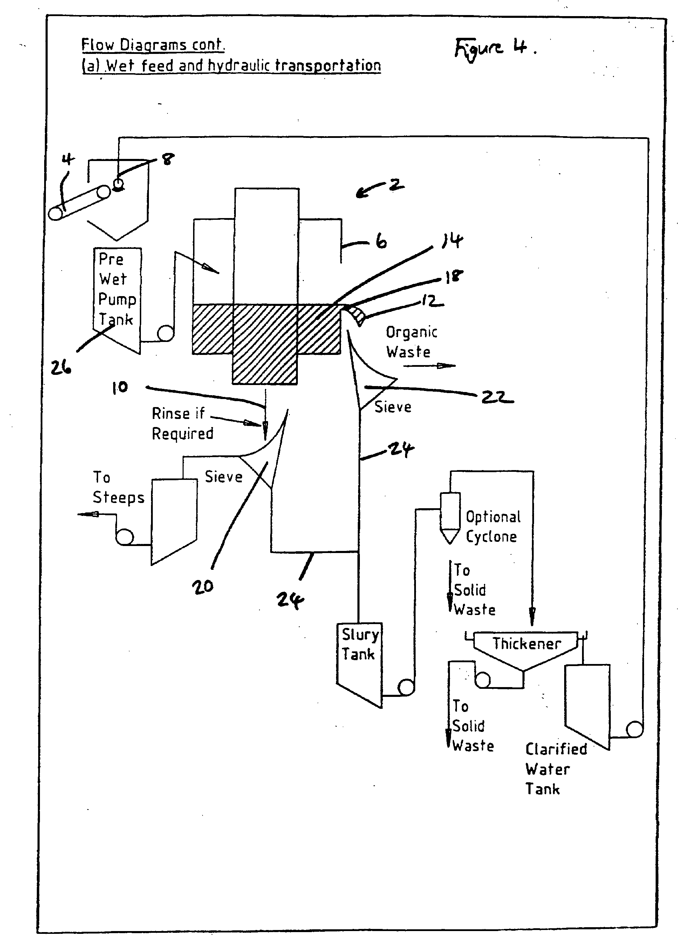

Sieve members 20 and 22 are provided at the ends of grain exit chute 10 and extraneous material exit chute 12 respectively, and said sieve members can be either static or vibrating. Sieve member 20 collects the healthy grain which is then taken for malting. A small percentage of non-organic debris, such as soil and stones, may sink with the grain in the drum 6 and be discharged along grain exit chute 10. Typically these non-organic solids are of a fine nature and sieve member 20 has sieving apertures of such size so as to allow said non-organic solids to fall through the apertures of the sieve. Sinking solid debris can be extracted further from the water system by using cyclones or thickener(s) to produce a high solids concentration slurry which can be further processed from subsequent waste disposal as illustrated in Figures 3 and 4.

Sieve member 22 collects the extraneous matter which is disposed of as organic waste or can be dried and further processed for use as animal feed. Waste water is discharged through drains 24 and can be clarified and recycled for use as the water supply 8.

The grain collected from sieve 20 can undergo further washing processes if required.

The rotatable drum is preferably made out of stainless steel since some grains such as barley are weakly acidic in water. The use of stainless steel prevents corrosion of the drum caused by the acid, thereby prolonging the life of the drum. Other materials can be used for manufacture of the drum but the useful life of the drum is limited by the resistance of the materials to corrosion by the acidic grain.

The rotatable drum can be rotated by means of a powered belt or chain driven mechanism, a gear mechanism or by mounting the drum on wheels which are driven by drive means.

The grain can be delivered to the grain reception chute in a dry form, as illustrate in Figures 1 and 3, or the grain can be thoroughly wetted in a pre-wet tank 26, as illustrated in Figure 4, before being pumped directly into the retaining drum. Thereafter the washing process is as previously described.

The grain can be mechanically transported from sieve 20, as illustrated in Figure 3, or the grain can be received in a reception tank which can then be hydraulically transported to a steeps vessel or other processing vessel using clean water as the transporting medium, as illustrated in Figure 4. The latter transportation system has the advantage that the steeps vessel is filled at the same time with the transporting medium and reduces the time for completion of the steeping process.

## Claims

1. Washing and/or material separating apparatus suitable for washing and separating grain from extraneous material, said apparatus including a rotatable hollow reservoir for containing a liquid, said reservoir having grain exit means and extraneous material exit means, and **characterised in that** said reservoir is provided with one or more skirt members adjacent at least a portion of the internal surface thereof, said skirt members provided for trapping said grain which has sunk or is sinking in the liquid in the reservoir on rotation of said reservoir, said trapped grain leaving the said skirt members via said grain exit means and said extraneous material floating at or near the liquid surface in the reservoir and being removed from said reservoir via said extraneous material exit means.

2. Apparatus according to claim 1 **characterised in that** the skirt members are in the form of wall members substantially parallel with at least a part of the internal surface of the reservoir and provided a spaced distance apart therefrom, the grain being trapped in the skirt members during rotation of said reservoir.

3. Apparatus according to claim 1 **characterised in that** the grain exit means is in the form of one or more apertures defined in a wall or wall of the reservoir, the grain being released from said aperture(s) when said aperture(s) is rotated to a position at the base of the reservoir.

4. Apparatus according to claim 1 **characterised in that** two skirt members are provided in the reservoir and at least apertures are defined at the ends of the skirt members to allow discharge of grain and liquid therefrom.

5. Apparatus according to claim 1 **characterised in that** liquid is caused to flow through the reservoir and the extraneous material is moved to said extraneous material exit means via the flow of liquid through the reservoir and/or the different sized inlet and outlet means to the skirt members.

6. Apparatus according to claim 5 **characterised in that** outlet means of the skirt member(s) via which the grain and liquid is discharged is larger than the inlet means of the skirt member(s) via which the grain and liquid enter the skirt member(s).

7. Apparatus according to claim 5 **characterised in that** the extraneous material exit means is in the form of a weir at an end of the reservoir.

8. Apparatus according to claim 7 **characterised in that** weir is provided at a point on the rotational axis of the reservoir.

9. Apparatus according to claim 1 **characterised in that** the grain and/or extraneous material is discharged from their respective exit means onto an exit chute for removal from said reservoir.

10. Apparatus according to claim 1 **characterised in that** one or more sieves are provided for the grain and/or extraneous material to move onto following discharge from the reservoir to allow collection of the grain and/or material.

11. Apparatus according to claim 1 **characterised in that** the grain enters the reservoir at an end of the reservoir along the rotational axis thereof.

12. Apparatus according to claim 1 **characterised in that** the grain enters the reservoir at the opposite end to the extraneous material exit means.

13. Apparatus according to claim 1 **characterised in that** unwashed grain is conveyed into the reservoir in a dry form via a grain reception chute.

14. Apparatus according to claim 13 **characterised in that** a liquid supply is provided in communication with the grain reception chute to wet the grain prior to the grain entering the reservoir.

15. Apparatus according to claim 1 **characterised in that** a pre-reservoir reception container containing liquid is provided for wetting the grain prior to delivery of liquid and grain into the rotatable reservoir.

16. Apparatus according to claim 15 **characterised in that** pump means are provided to pump the grain and liquid from the pre-reservoir reception container into the reservoir.

17. Apparatus according to claim 1 **characterised in that** the liquid is water.

18. Apparatus according to claim 1 **characterised in that** the reservoir is in the form of a drum and the one or more skirt members are provided adjacent at least a part of the internal circumference thereof.

19. Apparatus according to claim 18 **characterised in that** the drum is made from stainless steel.

20. Apparatus according to claim 1 **characterised in that** the reservoir is rotated by means of a power belt driven mechanism

21. Apparatus according to claim 1 **characterised in that** the reservoir is rotated by means of a gear mechanism.

22. Apparatus according to claim 1 **characterised in that** the reservoir is rotated by means of powered support rollers or wheels.

23. A method suitable for washing and separating grain from extraneous material, said method including the steps of inputting grain into a rotatable hollow reservoir containing a liquid, leaving the grain in said rotating reservoir for a pre-determined period of time to allow the grain to sink in the liquid and become trapped in one or more skirt members provided on at least a portion of the internal surface thereof, removing said trapped grain from said skirt members via grain exit means, the extraneous material floating at the liquid surface in the reservoir and removing said extraneous material via said extraneous material exit means.

24. A method according to claim 23 **characterised in that** liquid is caused to flow through the reservoir and the extraneous material is moved to said extraneous material exit means via the flow of liquid through the reservoir.

25. A method according to claim 23 **characterised in that** the grain is input into the reservoir in a dry form via a grain reception chute.

26. A method according to claim 25 **characterised in that** a liquid is passed down at least a part of the grain reception chute to move the grain into the reservoir.

27. A method according to claim 23 **characterised in that** the grain is contained in liquid in a pre-reservoir container prior to inputting the liquid and grain into the reservoir.

28. A method according to claim 23 **characterised in that** once the grain is discharged from said reservoir, it is collected and passed to apparatus for malting and/or further washing.

29. A method according to claim 23 **characterised in that** once the extraneous material is discharged from said reservoir, it is collected and disposed of as organic waste and/or dried for animal feed.
